# DEMANDE DE BREVET EUROPEEN

(11) **EP 2 431 528 A1**
(43) Date de publication de la demande: **21.03.2012**
(21) Numéro de dépôt: 11181529.6
(22) Date de dépôt: 16.09.2011
(51) Int. Cl.: E01H 1/08, F04D 29/28, A01G 1/12

(54) **Machine de ramassage par aspiration de déchets, à désaccouplement de turbine**

(30) Priorité: 20.09.2010 FR 1057511
(71) Demandeur: COCHET, 72130 Souge-le-Ganelon (FR)
(72) Inventeur: Cochet, Ludovic, 61250 Damigny (FR)
(74) Mandataire: Thinat, Michel

(57) **Abrégé**

Machine de ramassage par aspiration de déchets tels que des feuilles mortes, comprenant une turbine montée dans un carter (14) et permettant d'aspirer de l'air pour d'une part prélever les déchets à une entrée du carter de la turbine et d'autre part d'évacuer les déchets à une sortie du carter de la turbine, et un dispositif d'entraînement (20) de la turbine. Un système d'arrêt (50) de la turbine permet de désaccoupler la turbine de son dispositif d'entraînement (20) et arrêter sa rotation.

## Description

La présente invention est relative à une machine de ramassage par aspiration de déchets.

Plus particulièrement, l'invention concerne une machine de ramassage par aspiration de déchets tels que des feuilles mortes, comprenant une turbine montée dans un carter et permettant d'aspirer de l'air pour d'une part prélever les déchets à une entrée du carter de la turbine et d'autre part d'évacuer les déchets à une sortie du carter de la turbine, et un dispositif d'entraînement de la turbine.

Ce genre de machine est connu du document EP0383694.

Dans le cadre de l'utilisation d'une telle machine installée sur une remorque ou sur une ridelle de camion en ayant l'entrée du carter reliée à une manche à air à manipuler par un opérateur, il est nécessaire de sécuriser le fonctionnement pour éviter une aspiration indésirable. En outre, une telle machine pouvant aspirer des pierres, il est avantageux que le carter puisse demeurer en bon état. Il est utile que la turbine soit aussi efficace que possible, en particulier en évitant les bourrages.

La présente invention a notamment pour but de remédier aux inconvénients de l'art antérieur.

A cet effet, l'invention a pour objet une machine de ramassage par aspiration de déchets tels que des feuilles mortes, comprenant une turbine montée dans un carter et permettant d'aspirer de l'air pour d'une part prélever les déchets à une entrée du carter de la turbine et d'autre part d'évacuer les déchets à une sortie du carter de la turbine, et un dispositif d'entraînement de la turbine, caractérisée en ce qu'elle comprend un système d'arrêt de la turbine pour désaccoupler la turbine de son dispositif d'entraînement et arrêter sa rotation.

Dans divers modes de réalisation de la machine selon l'invention, on peut éventuellement avoir recours en outre à l'une et/ou à l'autre des dispositions suivantes :
- le système d'arrêt de la turbine comporte un levier d'actionnement de frein de la turbine, le levier étant d'une part à une position de service pour que le dispositif d'entraînement de la turbine puisse oeuvrer et que la turbine ne soit pas freinée et d'autre part à une position active pour arrêter la rotation de la turbine ;
- le système d'arrêt comporte une courroie de freinage qui est active en étant en prise avec une poulie solidaire de la turbine pour freiner cette turbine et qui est en position de service en étant désaccouplée de cette poulie ;
- le levier d'actionnement et la courroie de freinage sont solidaires pour que l'actionnement du levier de sa position de service à sa position active corresponde respectivement au passage de l'état de service à l'état actif de ladite courroie.

Dans un mode de réalisation de la machine, d'une part le dispositif d'entraînement de la turbine comporte une courroie de transmission de couple et un tendeur de cette courroie et d'autre part le système d'arrêt de la turbine comporte un dispositif de désactivation du tendeur, ce dispositif étant en position de service lorsqu'un couple doit être transmis par la courroie de transmission et étant actif pour rendre la courroie de transmission de couple inopérante ;
- le levier d'actionnement est monté pivotant sur le carter de la turbine en pouvant être bloqué en position de service par rapport au carter à l'encontre de la force de rappel d'un ressort de freinage tendant à le placer à sa position active ;

Dans ce mode de réalisation, le levier d'actionnement de frein de la turbine est également un levier d'actionnement du tendeur de la courroie de transmission, de manière que l'actionnement du levier de sa position de service à sa position active corresponde respectivement au passage de l'état de service à l'état actif du dispositif de désactivation du tendeur.

Avantageusement, le tendeur de courroie de transmission comporte un bras de commande de tension pourvu d'un galet tendeur dont un mouvement par rapport au carter dépend de la position du levier d'actionnement.

Avantageusement, le bras de commande est un balancier monté pivotant sur le carter de la turbine en ayant une extrémité portant le galet tendeur et une extrémité reliée au levier d'actionnement par un ressort de liaison.

Selon un mode de réalisation avantageux de la machine, le carter dans lequel est montée la turbine comporte une paroi externe, une paroi interne radialement en regard de la turbine et une couche en matériau amortissant interposée entre lesdites parois pour protéger la paroi externe des déformations produites par les déchets sur la paroi interne.

D'autres buts, caractéristiques et avantages de l'invention apparaîtront au cours de la description suivante d'un de ses modes de réalisation, donné à titre d'exemple non limitatif, en regard des dessins joints.

Sur les dessins :

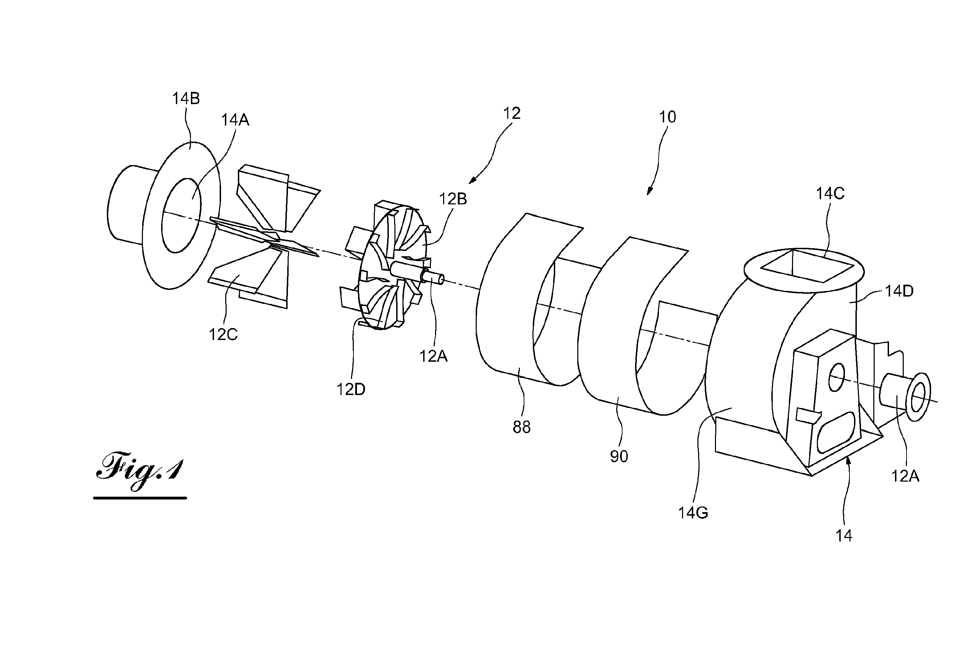

- la figure 1 est une vue en perspective et en éclaté d'un carter de turbine de machine selon l'invention et de la turbine ;
- la figure 2 est une vue en perspective du carter de turbine de la machine selon l'invention, avec son dispositif d'entraînement et son système d'arrêt de la turbine, en position de service de ce système d'arrêt ;
- la figure 3 est une vue de côté du carter de turbine de la machine selon l'invention, avec son dispositif d'entraînement et son système d'arrêt de la turbine, en position de service de ce système d'arrêt ;

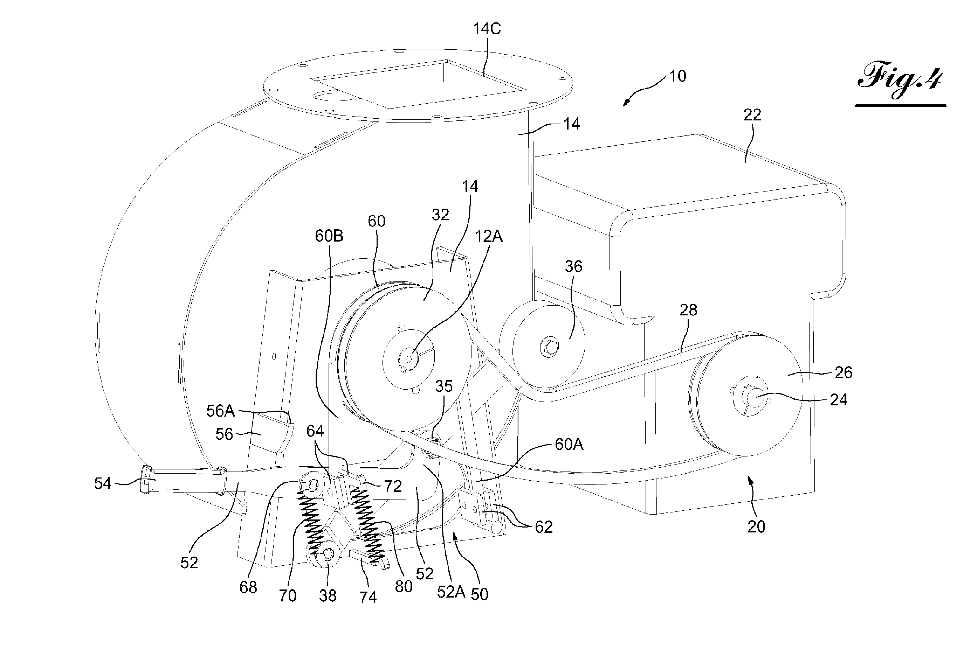

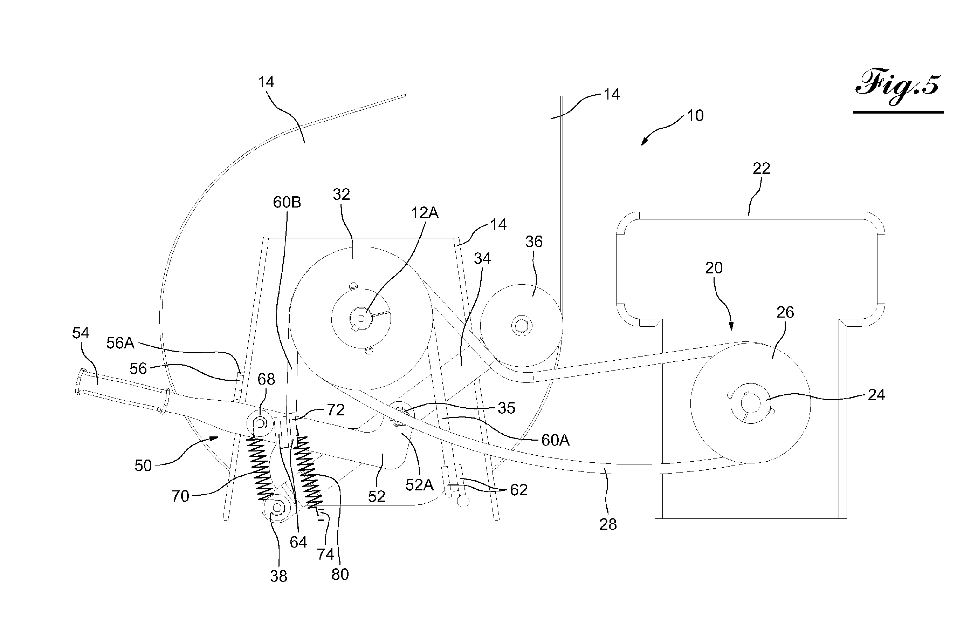

- la figure 4 et la figure 5 sont des vues conformes respectivement aux figures 2 et 3, quand le système d'arrêt est actif.

Sur les différentes figures, les mêmes références désignent des éléments identiques ou similaires.

En se reportant aux figures, la référence 10 désigne une machine selon l'invention pour le ramassage par aspiration de déchets tels que des feuilles mortes. La machine 10 comprend une turbine 12 montée dans un carter 14 déterminant une volute.

Dans la description qui va suivre, la direction désignée comme longitudinale correspond à celle de l'axe de la turbine 12, cet axe étant considéré comme horizontal.

La turbine 12 permet d'aspirer de l'air pour d'une part prélever les déchets à une entrée 14A du carter 14, sur un bouchon vertical 14B de la volute du carter 14 de la turbine et d'autre part d'évacuer les déchets à une sortie 14C du carter 14, en haut de sa volute. L'entrée 14A est raccordée à une manche à air non représentée aux figure car de type connue. Cette manche à air est adaptée à être manipulée par un opérateur pour prélever des déchets de type feuilles mortes par exemple.

La turbine 12 a son arbre longitudinal 12A qui porte une plaque transversale 12B et comporte des pales démontables 12C du côté de la plaque 12B situé en regard de l'entrée 14A du carter 14. La turbine 12 comporte des ailettes 12D, longitudinalement moins grandes que les pales 12C, du côté de la plaque 12B situé en regard de la sortie 14C du carter 14. Ces grandes pales 12C permettent une bonne circulation des déchets et ces petites ailettes 12D permettent tant le refroidissement de la machine au fond 14D du carter 14 qu'une circulation d'air évitant les bourrages.

La machine 10 comprend un dispositif 20 d'entraînement de la turbine 12 comportant un moteur qui est protégé par un boîtier 22 et dont l'axe de sortie 24 est solidaire d'une poulie motrice 26. Cette poulie motrice 26 est en prise avec une courroie de transmission de couple 28 pour entraîner une poulie menée 32 solidaire de l'arbre 12A de la turbine 12. Cette poulie menée comporte deux gorges de réception de courroie.

Un tendeur de la courroie de transmission 28 comprend un bras de commande de tension 34 constituée par un balancier dont l'axe de pivotement 35 par rapport au carter 14 est situé sensiblement à la moitié de sa longueur.

Le bras de commande de tension 34 est pourvu à l'une de ses extrémités d'un galet tendeur 36 pouvant se débattre par rapport au carter 14 suivant les déplacements par rotation du bras 34. L'autre extrémité du bras de commande de 34 est pourvue d'une attache 38 sensiblement en forme de champignon.

La machine 10 comprend en outre un système d'arrêt 50 de la turbine 12 pour désaccoupler la turbine 12 de son dispositif d'entraînement 20 et arrêter sa rotation.

Le système d'arrêt 50 comporte un levier actionnement 52 monté pivotant par rapport au carter 14 par l'intermédiaire de l'axe de pivotement 35 servant au pivotement du bras de commande de tension 34. L'axe de pivotement 35 est à l'une des extrémités 52A du levier d'actionnement 52. À son extrémité libre, le levier d'actionnement 52 comporte une manette 54 accessible à un opérateur à l'extérieur d'un cache d'habillage de la machine 10. Ce cache est fendu pour laisser monter et descendre le levier 52. Il n'est pas représenté aux figures car il doit être démonté pour que le dispositif d'entraînement 20 et le système d'arrêt 50 soient visibles.

A proximité de la manette 54, le système d'arrêt 50 comporte une plaque de butée 56 à crochet d'extrémité 56A sur laquelle le levier actionnement 52 repose quand il est à une position de service. A cette position, le système d'arrêt 50 autorise une transmission de couple par la courroie de transmission 28.

Le système d'arrêt 50 comporte une courroie de freinage 60 qui est susceptible de venir freiner la poulie menée 32 en revenant se presser dans une gorge de cette dernière. La courroie de freinage 60 présente une extrémité fixe 60A serrée entre deux plaquettes fixes de serrage 62 solidaires du carter 14. La courroie de freinage présente une extrémité mobile 60B serré entre deux plaquettes mobiles de serrage 64 solidaires du levier d'actionnement 52, sensiblement à mi longueur de ce dernier.

Les plaquettes 62 et 64 sont situées à distance de la poulie menée 32 et sensiblement sous cette dernière de manière que les tronçons d'extrémité de la courroie de freinage 60 soient sensiblement tangents à cette poulie, en des points diamétralement opposés de cette dernière.

Le levier d'actionnement 52 supporte, sensiblement à sa mi longueur, une attache 68 reliée à l'attache 38 du bras de commande de tension 34 par l'intermédiaire d'un ressort de liaison 70. L'attache 68 est sensiblement en forme de champignon.

Ce ressort 70, qui est un ressort hélicoïdal de traction 70, sert à lier le mouvement du levier d'actionnement 52 avec celui du bras de commande 34. En effet, les extrémités du ressort de liaison 70 comportent des boucles retenues par les attaches 38 et 68 en forme de champignon. Ainsi à la position du galet tendeur 36 tout comme à la tension de la courroie de transmission 28 dépendent du positionnement du levier d'actionnement 52.

En outre l'une des plaquettes 64 solidaires du levier actionnement 52 comporte une patte d'attache 72 à crochet d'extrémité. Sensiblement à l'aplomb de cette pâte d'attache 72, le carter 14 supporte une languette d'attache 74 à crochet d'extrémité. Le système d'arrêt 50 comporte un ressort de freinage 80, attaché à ses extrémités à la patte d'attache 72 et à la languette d'attache 74. Les extrémités du ressort de freinage 80 comportent des boucles retenues par les crochets de la patte d'attache 72 et de la languette d'attache 74.

le carter 14 dans lequel est montée la turbine 12 comporte une paroi externe 14G de volute, à distance de l'extrémité libre des pales et ailettes de la turbine, une paroi interne 88 radialement en regard de la turbine 12 et une couche en matériau amortissant 90 interposée entre lesdites parois 14G, 88 pour protéger la paroi externe 14G des déformations produites par les déchets sur la paroi interne 88. En effet, la couche 90 absorbe les déformations de la paroi interne 88 et empêche ou amenuise leur transmission à la paroi externe 14G dont l'aspect est préservé.

Le fonctionnement de la machine ressort déjà en partie de la description qui précède et va maintenant être détaillé.

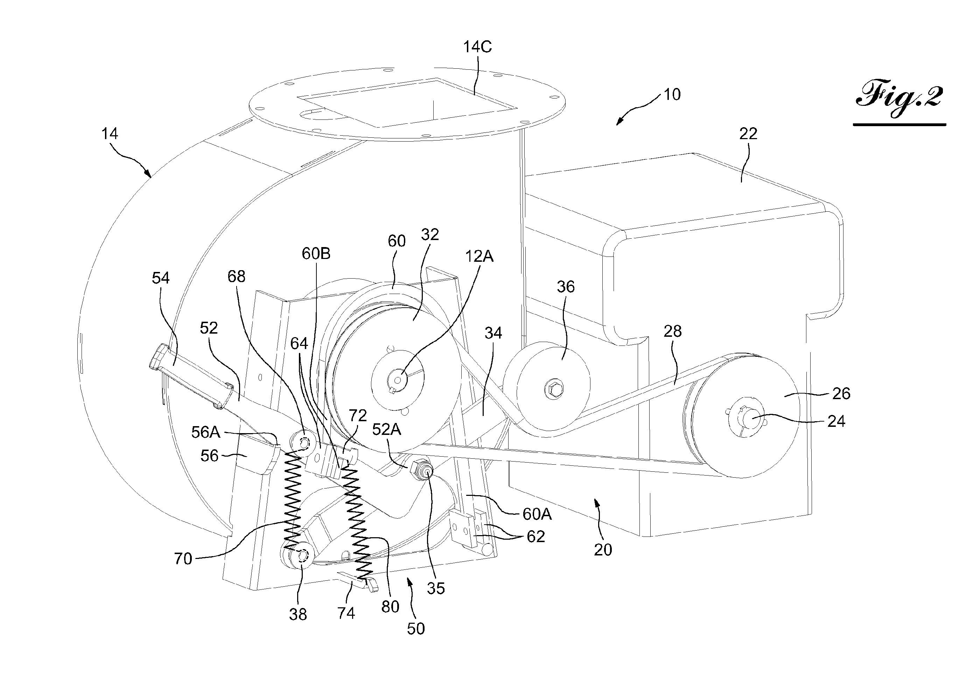

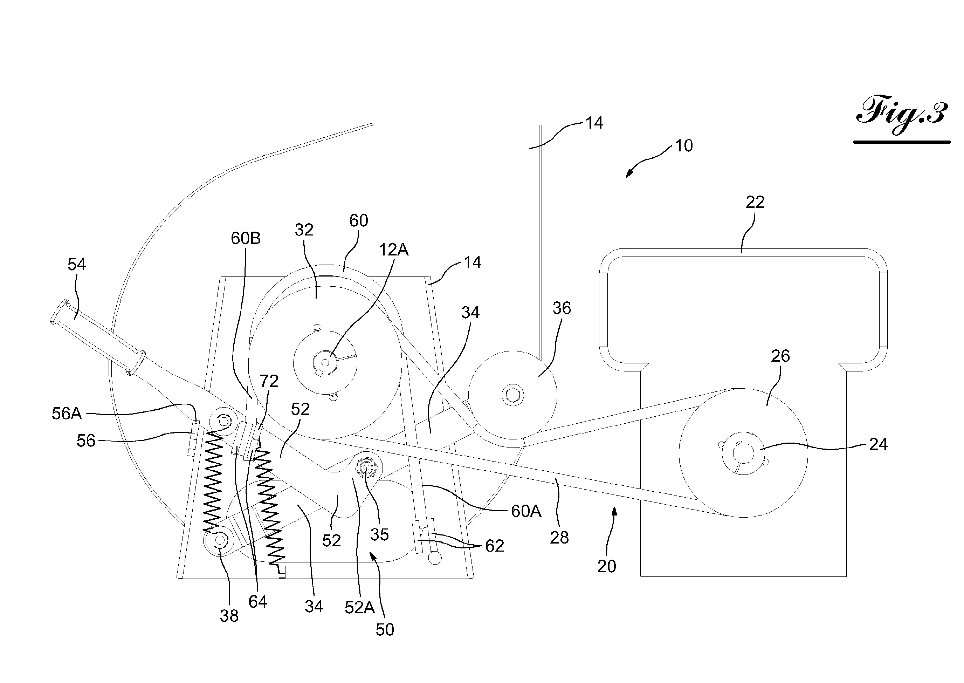

Quand la machine de ramassage de feuilles ou autres déchets par aspiration 10 est à sa position de service, qui correspond à l'état de la machine telle illustrée à la figure 2 et à la figure 3, le levier d'actionnement 52 et en butée sur la plaquette de butée 56, sous l'action du ressort de freinage 80 qui tire le levier d'actionnement 52 vers le bas. Du fait de cette butée, le ressort de freinage 80 ne commande pas de freinage de la turbine 12. La courroie de freinage 60 n'agit pas sur la poulie menée 32.

La courroie de transmission de couple 28 est tendue car le galet tendeur 36 a tendance à appuyer vers le bas sous l'action du ressort de liaison 70 qui tire l'extrémité libre du bras de commande de tension 34. Quand le moteur est en route, la turbine 12 tourne à sa vitesse de service pour aspirer. Ainsi, un opérateur manipulant la manche d'aspiration reliée à l'entrée du carter 14A peut aspirer des déchets tels que les feuilles mortes.

Pour mettre en sécurité la machine 10, il faut que la turbine 12 ne tourne pas. À cet effet un opérateur manipulant la manette 54 déplace le levier d'actionnement 52 légèrement vers le haut et en direction opposée à la turbine 12 et à son carter 14 en volute, pour dégager le levier 52 de la plaque de butée 56 et de son crochet d'extrémité 56A. Une rondelle élastique tronconique en métal, de type Belleville, positionnée sur l'axe 35, permet un jeu longitudinal suffisant du levier 52.

Ensuite, l'opérateur laisse le levier d'actionnement 52 s'abaisser sous la plaque de butée 56, sous l'action du ressort de freinage 80 qui tire le levier vers le bas. À cette position abaissée du levier d'actionnement 52, l'action du ressort de liaison 70 fait descendre l'attache 38 en correspondance de l'abaissement du levier d'actionnement 52 et fait remonter le galet tendeur 36 de manière que celui-ci soit désactivé et relâche la tension de la courroie de transmission 28. Le ressort de freinage 80 et le ressort de liaison 70 associés au levier 52 et au bras 34, constitue ici un dispositif de désactivation du tendeur de la courroie de transmission. L'abaissement du levier d'actionnement 52 de sa position de service à sa position active de freinage provoque une traction vers le bas de la courroie de freinage 60 qui vient s'engager par son tronçon courbe supérieur dans la gorge correspondante de la poulie menée 32. Cet engagement provoque des frottements entre la courroie de freinage 60 et la poulie menée 32, si bien que la turbine 12 s'arrête de tourner.

## Revendications

1. Machine de ramassage par aspiration de déchets tels que des feuilles mortes, comprenant une turbine (12) montée dans un carter (14) et permettant d'aspirer de l'air pour d'une part prélever les déchets à une entrée (14A) du carter de la turbine et d'autre part d'évacuer les déchets à une sortie (14C) du carter de la turbine, et un dispositif d'entraînement (20) de la turbine, **caractérisée en ce qu'**elle comprend un système d'arrêt (50) de la turbine pour désaccoupler la turbine (12) de son dispositif d'entraînement (20) et arrêter sa rotation.

2. Machine selon la revendication précédente, **caractérisée en ce que** le système d'arrêt (50) de la turbine comporte un levier d'actionnement de frein (52) de la turbine, le levier étant d'une part à une position de service pour que le dispositif d'entraînement (20) de la turbine puisse oeuvrer et que la turbine ne soit pas freinée et d'autre part à une position active pour arrêter la rotation de la turbine.

3. Machine selon l'une quelconque des revendications précédentes, **caractérisée en ce que** le système d'arrêt (50) comporte une courroie de freinage (60) qui est active en étant en prise avec une poulie (32) solidaire de la turbine (12) pour freiner cette turbine et qui est en position de service en étant désaccouplée de cette poulie.

4. Machine selon les revendications 2 et 3 prises en combinaison, **caractérisée en ce que** le levier d'actionnement (52) et la courroie de freinage (60) sont solidaires pour que l'actionnement du levier (52) de sa position de service à sa position active corresponde respectivement au passage de l'état de service à l'état actif de ladite courroie.

5. Machine selon l'une quelconque des revendications précédentes, **caractérisée en ce que** d'une part le dispositif d'entraînement (20) de la turbine comporte une courroie de transmission de couple (28) et un tendeur (34, 36) de cette courroie et d'autre part le système d'arrêt (50) de la turbine comporte un dispositif de désactivation du tendeur, ce dispositif étant en position de service lorsqu'un couple doit être transmis par la courroie de transmission et étant actif pour rendre la courroie de transmission de couple inopérante.

6. Machine selon les revendications 4 et 5 prises en combinaison, **caractérisée en ce que** le levier d'actionnement de frein (52) de la turbine est également un levier d'actionnement du tendeur (34, 36) de la courroie de transmission (28), de manière que l'actionnement du levier (52) de sa position de service à sa position active corresponde respectivement au passage de l'état de service à l'état actif du dispositif de désactivation du tendeur.

7. Machine selon l'une quelconque des revendications 2 à 6, **caractérisée en ce que** le levier d'actionnement (52) est monté pivotant sur le carter (14) de la turbine (12) en pouvant être bloqué en position de service par rapport au carter à l'encontre de la force de rappel d'un ressort de freinage (80) tendant à le placer à sa position active.

8. Machine selon les revendications 6 et 7 prises en combinaison, **caractérisée en ce que** le tendeur (34, 36) de courroie de transmission comporte un bras de commande de tension (34) pourvu d'un galet tendeur (36) dont un mouvement par rapport au carter (14) dépend de la position du levier d'actionnement (52).

9. Machine selon la revendication précédente, **caractérisée en ce que** le bras de commande (34) est un balancier monté pivotant sur le carter (14) de la turbine en ayant une extrémité portant le galet tendeur (36) et une extrémité reliée au levier d'actionnement (52) par un ressort de liaison (70).

10. Machine selon l'une quelconque des revendications précédentes, **caractérisée en ce que** le carter (14) dans lequel est montée la turbine (12) comporte une paroi externe (14G), une paroi interne (88) radialement en regard de la turbine (12) et une couche en matériau amortissant (90) interposée entre lesdites parois (14G, 88) pour protéger la paroi externe des déformations produites par les déchets sur la paroi interne.
